# EUROPEAN PATENT SPECIFICATION

(11) **EP 2 816 858 B1**
(45) Date of publication and mention of the grant of the patent: **21.03.2018**
(21) Application number: 13290144.8
(22) Date of filing: 17.06.2013
(51) Int. Cl.: H04W 72/12

(54) **BASE STATION AND METHOD OF OPERATING A BASE STATION**
BASISSTATION UND VERFAHREN ZUM BETREIBEN EINER BASISSTATION
STATION DE BASE ET SON PROCÉDÉ DE FONCTIONNEMENT

(43) Date of publication of application: 24.12.2014
(60) Divisional application: 18153361.3
(73) Proprietor: ALCATEL LUCENT, 92100 Boulogne-Billancourt (FR)
(72) Inventor: Braun, Volker, 70435 Stuttgart (DE); Doetsch, Uwe, 70435 Stuttgart (DE)
(74) Representative: Wetzel, Emmanuelle

(56) References cited:
- EP-A1- 2 509 380
- US-A1- 2011 103 292
- OJANPERÄ ET AL: "FRAMES-hybrid multiple access technology", IEEE ISSSTA. IEEE INTERNATIONAL SYMPOSIUM ON SPREAD SPECTRUMTECHNIQUES AND APPLICATIONS, XX, XX, no. 1, 22 September 1996 (1996-09-22), pages 320-324, XP002077020,

## Description

### Specification

### Field of the invention

The present invention relates to a method of operating a base station of a cellular communications network, wherein time and frequency resources are used for data transmission. The invention further relates to a corresponding base station.

### Background

EP 2 509 380 A1 discloses a method and device for distributing and scheduling wireless resources in an orthogonal frequency division multiplexing system.

One example for a communications standard where time and frequency resources are used for data transmission is the LTE standard, which is inter alia defined by 3GPP (3rd Generation Partnership Project) Specification series 3GPP TS 36.xxx, wherein 3GPP TS 36.211 relates to Physical Channels and Modulation. For further explanations in this application, the term "LTE standard" generally refers to the specification series 3GPP TS 36.xxx, particularly to LTE Release 8.

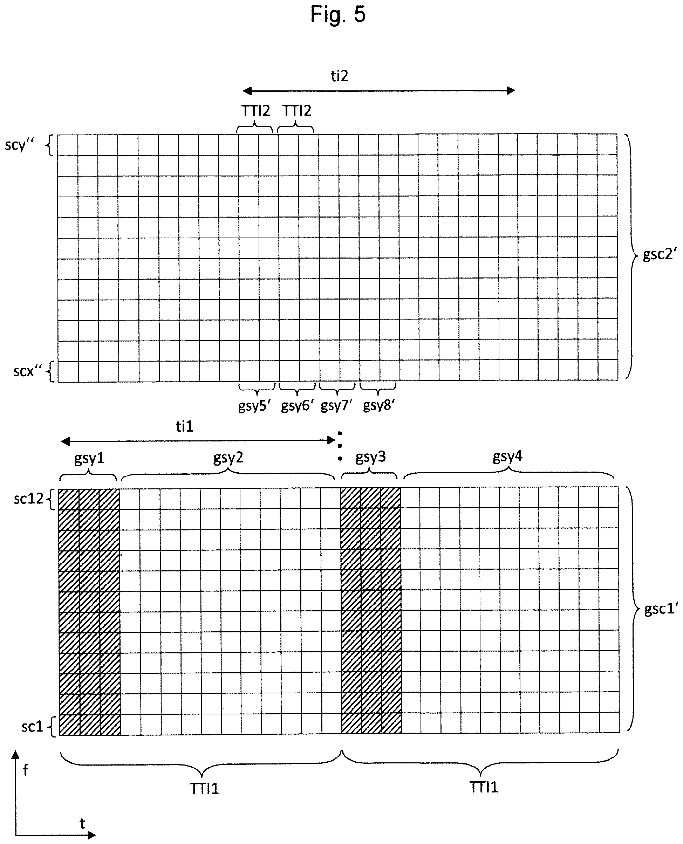

More specifically, regarding 3GPP TS 36.211, in the following description, document version V8.7.0 is referred to, which is e.g. available on the World Wide Web (http://www.3gpp.org/ftp/Specs/html-info/36211.htm). This document depicts time/frequency transmission resources for uplink and downlink transmissions, cf. e.g. Figure 5.2.1-1: Uplink resource grid and Figure 6.2.2-1: Downlink resource grid. According to these Figures, time/frequency transmission resources are partitioned into a plurality of subsequent SC-FDMA or OFDMA symbols along the time dimension, and into a plurality of subsequent subcarriers along the frequency dimension.

It is an object of the present invention to provide an improved method of operating a base station and a base station which enable efficient data transmissions with low end-to-end ("E2E") latencies.

### Summary

According to the present invention, regarding the abovementioned base station, this object is achieved in that a first scheduling granularity is used for scheduling first resources associated with a first frequency range, and wherein a second scheduling granularity, which is different from said first scheduling granularity, is used for scheduling second resources associated with a second frequency range, wherein said first and second scheduling granularities are used within respective time intervals which at least partly overlap each other. This advantageously enables the base station to e.g. serve different terminals with different scheduling granularities so that different latency requirements may be accommodated by a single system. Further, at a time either one single (first or second) scheduling granularity may be used, or both scheduling granularities may be used (simultaneously).

According to an embodiment, the different scheduling granularities are provided along the time dimension, e.g. by providing different transmission time intervals. This advantageously enables to influence, particularly reduce, latencies for data transmissions. According to a further embodiment, different scheduling granularities may also be implemented by providing non-contiguous resource regions along time and/or frequency dimension.

According to a further embodiment, different scheduling granularities are also used along a frequency dimension. I.e. within the LTE context, different numbers of subcarriers (which may also comprise one single or more subcarriers) may be the smallest resource unit for scheduling along frequency dimension, instead of whole resource blocks comprising e.g. 12 subcarriers. This increases flexibility in scheduling of resources. For example, when operating with a particularly small scheduling granularity along time dimension, to assign a substantial amount of resources, a larger scheduling granularity along frequency dimension may be chosen to attain a required amount of time and frequency resources.

According to a preferred embodiment, a first scheduling granularity used by the base station according to the embodiments may correspond with a conventional scheduling granularity. I.e., when applying the principle according to the embodiments to e.g. the LTE standard (Rel. 8, for example), it is possible that the base station according to the embodiments uses as a first scheduling granularity the scheduling granularity provided by LTE Rel. 8, which is 1 millisecond. However, according to the embodiments, a further, i.e. second scheduling granularity is also used by said base station, wherein the second scheduling granularity is preferably smaller than the first scheduling granularity. Thus, smaller "portions" of time/frequency resources may be provided for individual scheduling actions by the base stations, whereby shorter E2E latencies may be attained.

According to the embodiments, the first scheduling granularity is used for scheduling first resources associated with a first frequency range, whereas the second scheduling granularity is used for scheduling second resources associated with a second frequency range. Thus, it is possible for the base station to use the different scheduling granularities in a temporally overlapping fashion or even simultaneously. Thus advantageously, different terminals may simultaneously be served by the base station with using different scheduling granularities. For instance, a first number of conventional LTE Rel. 8 compatible terminals may be served by the base station according to the embodiments, whereas simultaneously and within another frequency range, a second number of other terminals may be served by the base station according to the embodiments with a smaller scheduling granularity.

These other terminals could e.g. form part of smart grid appliances and/or vehicle safety systems and/or generally machine-type communications a reliable operation of which requires small E2E latencies. Thereby, the base station according to the embodiments enables an advantageous double use of e.g. an existing LTE Rel. 8 infrastructure by serving conventional terminals (e.g. for voice and/or data services) in a conventional manner (i.e. with 1 ms scheduling granularity) and by serving terminals with particularly low latency requirements.

Although the aforementioned examples refer to LTE Rel. 8, the principle according to the embodiments is not limited to such LTE systems, but may generally be used with any communications system that makes use of time/frequency resources.

According to an embodiment, said first resources associated with said first frequency range comprise at least a first group of adjacent subcarriers, and/or said second resources associated with said second frequency range comprise at least a second group of adjacent subcarriers. Thus, the overall resources available for data transmission may be partitioned into different portions each of which is used in combination with different scheduling granularities. The partitioning may be performed statically (i.e. by definition in a communications standard), semi-statically (negotiated from time to time between e.g. base station and terminals and/or determined from time to time by the base station) or dynamically (i.e. depending on terminals' requests for different or smaller scheduling granularities and the like). When using adjacent subcarriers for the first and second frequency ranges, a particularly simple partitioning of the resources is attained and signalling and/or control requirements are minimized.

According to a further embodiment, said first frequency range is associated with a first component carrier, and/or said second frequency range is associated with a second component carrier, which is different from said first component carrier, whereby the inventive principle may also be applied to LTE Rel. 10 systems.

According to a further embodiment, during a specific time interval, said first scheduling granularity is used for scheduling resources associated with said first frequency range, and during said specific time interval, said second scheduling granularity is used for scheduling resources associated with said second frequency range. This is a particularly preferred embodiment, since simultaneous provisioning of different scheduling granularities - separated by means of the first/second frequency ranges - is enabled.

According to a further embodiment, a first transmission time interval (TTI) is associated with said first scheduling granularity, and wherein a second transmission time interval, which is different from said first transmission time interval, is associated with said second scheduling granularity. According to a preferred embodiment, which may e.g. be used as extension to LTE Rel. 8, 9, 10 standard, the first TTI may e.g. be about 1 millisecond, whereas the second TTI may e.g. be about (1/7) ms, i.e. about 0.1428 ms.

According to a further embodiment, resource partitioning information, which defines which of said frequency resources are to be used in combination with the first and/or second scheduling granularity (or further scheduling granularities, if more than two different scheduling granularities are provided), is provided semi-statically, preferably by means of system information broadcast, and/or radio resource control, RRC, signaling.

According to a further embodiment, if specific time/ frequency resources that are associated with said second scheduling granularity are unused for a time interval exceeding a predetermined threshold value (for example predetermined by standardization or configured e.g. via O&M (operation and maintenance) or RNC, radio network control, said specific time frequency resources are, at least temporarily, used for scheduling data traffic associated with said first scheduling granularity. For example, if the base station reserves a second frequency range for use with a second scheduling granularity, and if this second frequency range is not used for transmissions with said second scheduling granularity for a predetermined waiting time, the base station may at least temporarily enable said second frequency range to be used with the first scheduling granularity, too. This may e.g. apply in a scenario, where the second frequency range is operated with small TTI / low scheduling granularity, e.g. for machine-type communications, and if actually no single terminal makes use of said second frequency range. In this case, e.g. conventional terminals using the regular (i.e., first) TTI and/or scheduling granularity may be scheduled for said second frequency range.

According to a further embodiment, said base station determines whether a specific terminal supports said first scheduling granularity and/or said second scheduling granularity, and said base station schedules resources for said specific terminal depending on this determination. According to an embodiment, the determination may e.g. comprise interrogating a terminal and/or evaluating respective control information transmitted from said terminal to said base station.

According to a further embodiment, the first scheduling granularity is about 1 millisecond, and the second scheduling granularity is smaller than said first scheduling granularity, wherein the second scheduling granularity preferably ranges from about 50 microseconds to about 200 microseconds.

According to a further embodiment, a number of hybrid automatic repeat request (HARQ) processes used within a specific frequency range depends on the scheduling granularity used within said specific frequency range.

A further solution to the object of the present invention is given by a base station according to claim 10.

According to an embodiment, the base station is configured to, during a specific time interval, use said first scheduling granularity for scheduling resources associated with said first frequency range, and to use, during said specific time interval, said second scheduling granularity for scheduling resources associated with said second frequency range.

As an example, a first transmission time interval is associated with a first scheduling granularity of said base station, and wherein a second transmission time interval, which is different from said first transmission time interval, is associated with a second scheduling granularity of said base station. The terminal may determine which transmission time interval (TTI length) to use depending on static information, which is e.g. standardized and known to both the terminal and the base station, and/or depending on resource partitioning information provided by said base station via e.g. system information broadcast and/or RRC signalling.

According to a further embodiment, the terminal may determine which transmission time interval (TTI length) to use by means of dynamic scheduling, e.g. a terminal may be able to receive data on TTI1 and/or TTI2 by scanning the respective DL (downlink) control channels, i.e. a first control channel for data on TTI1 and a second control channel for data on TTI2.

As a further example, said terminal uses a first transmission time interval in a first frequency range, and said terminal uses a second transmission time interval, which is different from said first transmission time interval, in a second frequency range.

As yet another example, control data (e.g., CQI, RACH) is transmitted in a first frequency range with a first transmission time interval, and user data is transmitted in a second frequency range with a second transmission time interval.

Further features, aspects and advantages of the present invention are given in the following detailed description with reference to the drawings in which:

### Brief description of the figures

- Figure 1: depicts a schematic block diagram of a base station and a terminal according to an embodiment,
- Figure 2: schematically depicts a simplified flow-chart of a method according to the embodiments,
- Figure 3: schematically depicts time/frequency resources according to an embodiment,
- Figure 4: schematically depicts time/frequency resources according to a further embodiment, and
- Figure 5: schematically depicts time/frequency resources according to a further embodiment.

### Description of the embodiments

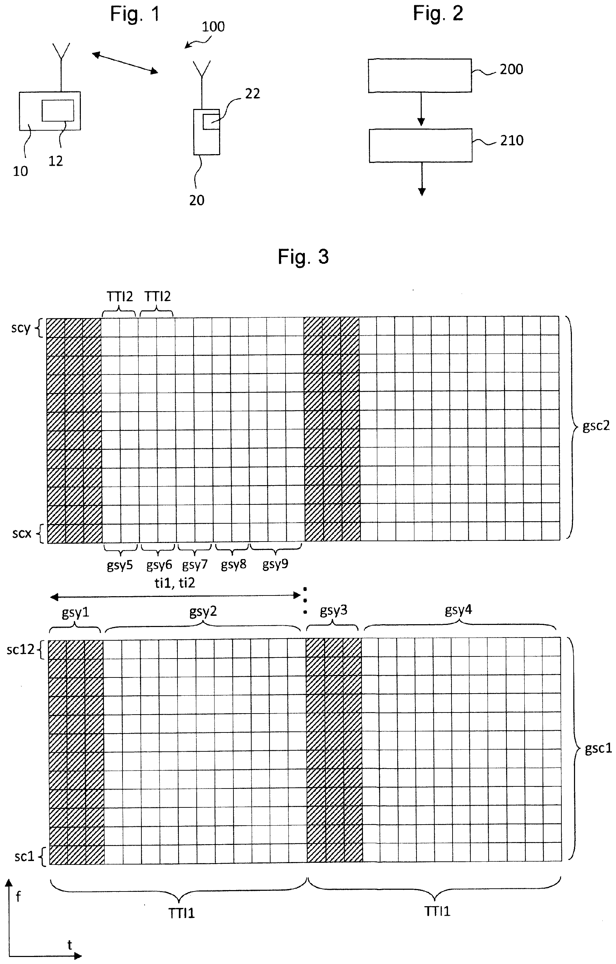

Figure 1 depicts a schematic block diagram of a base station 10 and a terminal 20 according to an embodiment. The devices 10, 20 may e.g. form part of a cellular communications network 100.

Although the principle of the embodiments is not limited to the LTE standard, for the further explanations it is assumed that a basic functionality of at least the base station 10 is compatible to the LTE Rel. 8 standard.

While the LTE standard only provides a single, fixed TTI of 1 millisecond, which is not sufficient to satisfy latency requirements of novel machine-type communications and/or vehicle safety systems and the like, the base station 10 according to the embodiments is configured (e.g. via O&M (operation and maintenance) or RNC, radio network control, or the like) to use, cf. step 200 of Fig. 2, a first scheduling granularity for scheduling first resources associated with a first frequency range, and to use, cf. step 210 of Fig. 2, a second scheduling granularity, which is different from said first scheduling granularity, for scheduling second resources associated with a second frequency range. Although Fig. 2 depicts the steps 200, 210 in sequence, according to some embodiments, the first and second scheduling granularities may also be used in an at least partially overlapping fashion by the base station 10, or even fully simultaneously.

This is enabled by considering different frequency ranges of the overall time/frequency resources available for use by the base station 10 and/or other devices 20 of the system 100 (Fig. 1), wherein said different scheduling granularities are associated with different frequency ranges.

In this context, Figure 3 exemplarily and schematically depicts time/frequency resources for downlink transmissions from the base station 10 (Fig. 1) to one or more terminals 20 according to an embodiment, wherein time and frequency dimension is indicated by the arrows t, f.

As can be seen from Fig. 3, a first group gsc1 of frequency subcarriers (short: subcarriers) sc1, .., sc12 is provided, said first group gsc1 of frequency subcarriers defining a first frequency range, which is associated with a first scheduling granularity. I.e., for scheduling resources within said first frequency range represented by the group gsc1, the base station 10 uses the first scheduling granularity. The first scheduling granularity may e.g. correspond with the conventional LTE Rel. 8 scheduling granularity that is derived from a standardized transmission time interval (TTI) of 1 millisecond, which is indicated by reference sign TTI1 of Fig. 3.

According to an embodiment, the frequency (i.e., subcarrier) allocations for the first and/or further frequency ranges may preferably be in integer multiples of physical resource blocks (N x 12 subcarriers). According to a further embodiment, the frequency (i.e., subcarrier) allocations for the first and/or further frequency ranges may also comprise single subcarriers and/or groups of single subcarriers, which are not necessarily contiguous or adjacent, respectively.

A transmission time interval TTI1 of the first frequency range of Fig. 3 comprises 14 OFDM symbols, the first three of which may e.g. be used for control information. These three OFDM symbols are denoted with reference sign gsy1 in Fig. 3. The further eleven OFDM symbols which are usually used for data transmission, are denoted with reference sign gsy2. Likewise, a next TTI1 comprises two OFDM symbol groups gsy3, gsy4, and so on.

The transmission time intervals TTI1 represent the smallest resource unit (along time dimension) which may individually be scheduled by a scheduler of the base station 10 (Fig. 1) and thus define the scheduling granularity for the first frequency range represented by the subcarrier group gsc1.

As can also be seen from Fig. 3, a second group gsc2 of subcarriers scx, .., scy is provided, said second group gsc2 of subcarriers defining a second frequency range, which is associated with a second scheduling granularity. I.e., for scheduling resources within said second frequency range represented by the group gsc2, the base station 10 uses the second scheduling granularity. According to an embodiment, the second scheduling granularity may e.g. correspond with a fraction of the conventional LTE Rel. 8 scheduling granularity of 1 millisecond. For example, the second scheduling granularity may e.g. be about 1/7 millisecond.

A transmission time interval TTI2 of the second frequency range of Fig. 3 may hence comprise only two OFDM symbols, cf. the groups gsy5, gsy6, gsy7, gsy8. The group gsy9 may comprise three OFDM symbols according to an embodiment.

In analogy to the first frequency range (subcarrier group gsc1 described above), the second frequency range (subcarrier group gsc2) may also provide for three OFDM symbols for control information (cf. group gsy1, the dashed OFDM symbols).

The transmission time intervals TTI2 represent the smallest resource unit (along time dimension) which may individually be scheduled by a scheduler of the base station 10 (Fig. 1) and thus define the scheduling granularity for the second frequency range represented by the subcarrier group gsc2.

As can be seen from Fig. 3, during specific time intervals ti1, ti2, which according to the present embodiment are fully overlapping and thus identical, different scheduling granularities are used within the different frequency ranges gsc1, gsc2.

It is evident that the specific number of subcarriers for the groups gsc1, gsc2, which define the frequency ranges, may be chosen by the base station, especially differently from the scheme depicted by Fig. 3, according to which each group gsc1, gsc2 only comprises rather few subcarriers for the sake of clarity.

For example, according to an embodiment which is based on an LTE Rel. 8 system, about 10 percent of the whole frequency spectrum available may be assigned to the second frequency range, i.e. for transmission with the second scheduling granularity, while about 90 percent of the whole frequency spectrum available may be assigned to the first frequency range, i.e. for transmission with the first scheduling granularity. Thus, about 10 percent of system capacity would be provided for systems/terminals with low latency requirements, which could make use of the reduced second TTI2 of e.g. about 1/7 ms, whereas about 90 percent of system capacity would be provided for conventional LTE Rel. 8 terminals.

Advantageously, by using a type of "frequency division multiplexing", i.e. assigning the different scheduling granularities to different frequency ranges, both conventional LTE capable terminals as well as terminals according to the present embodiments, which may e.g. selectively use TTI1 and/or TTI2, may simultaneously be served by the base station 10.

For implementing the principle according to the embodiments, the base station 10 may comprise respective functionality 12 (Fig. 1), e.g. in form of a processor and/or computer program code and the like, which may also be added to existing LTE capable circuitry. This also applies to the terminal 20, cf. circuitry 22.

According to a further embodiment, the principle based on at least two different scheduling granularities explained above with respect to Fig. 3 for the downlink direction may also be applied to the uplink direction in analogous fashion.

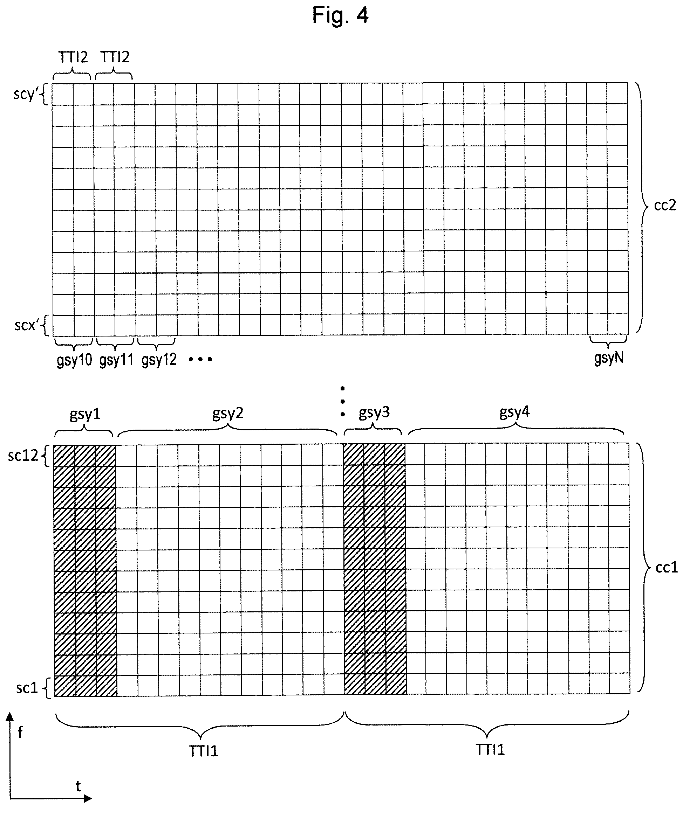

Fig. 4 exemplarily and schematically depicts time/frequency resources for downlink transmissions from the base station 10 (Fig. 1) to one or more terminals 20 according to a further embodiment.

In contrast to Fig. 3, where for example a single carrier is used for transmitting the various groups of subcarriers, the subcarriers sc1, .., sc12 and scx', .., scy' of Fig. 4 are transmitted using different component carriers cc1, cc2. The basic concept of component carriers is disclosed by LTE rel. 10 standardization documents.

Hence, according to the embodiment of Fig. 4, the first frequency range associated with a first scheduling granularity is transmitted using the first component carrier cc1, and the second frequency range associated with a second scheduling granularity is transmitted using the second component carrier cc2.

In addition, the time/frequency resources associated with the second component carrier cc2 are not used for control information (no dashed OFDM symbols) - these are rather transported by means of resource of the first component carrier cc1, cf. OFDM symbols gsy1, gsy3.

According to a further embodiment, the time/frequency resources associated with the second component carrier cc2 may also be used for transmitting control information, particularly for those terminals which operate with the second scheduling granularity.

As can be seen from Fig. 4, the scheduling granularity of resources associated with the first component carrier cc1 is fourteen OFDM symbols, also cf. the first transmission time interval TTI1, whereas the scheduling granularity of resources associated with the second component carrier cc2 is two OFDM symbols, also cf. the second transmission time interval TTI2 and the OFDM symbol groups gsy10, gsy11, gsy12, .., gsyN.

Although the aforementioned examples refer to LTE Rel. 8 and/or Rel. 10, the principle according to the embodiments is not limited to such LTE systems, but may generally be used with any communications system that makes use of time/frequency resources.

Fig. 5 exemplarily and schematically depicts time/frequency resources for downlink transmissions from the base station 10 (Fig. 1) to one or more terminals 20 according to a further embodiment. During a first time interval ti1 the first frequency range gsc1'is operated with a first scheduling granularity (e.g., TTI of 1ms) resulting in the depicted first transmission time interval TTI1. During a second time interval ti2, which according to the present embodiment partly overlaps with the first time interval ti1, the second frequency range gsc2' is operated with a smaller second scheduling granularity resulting in the depicted second transmission time intervals TTI2.

According to a further embodiment, prior to the second time interval ti2 and/or after said second time interval ti2, the second frequency range gsc2' may be operated with either the first or second scheduling granularity, or with a further, i.e. third, scheduling granularity.

According to a further embodiment, during the first time interval ti1, the time frequency resources of the first frequency range sc1' may be used to transmit user and/or control data, cf. the OFDM symbol groups gsy1, gsy2. According to a further embodiment, during the second time interval ti2, two OFDM symbols each form respective groups gsy5', gsy6', gsy7', gsy8', which correspond to the smaller second scheduling granularity and thus reduced TTI2. According to an embodiment, also the groups gsy5', gsy6', gsy7', gsy8', which correspond to the smaller second scheduling granularity may be used to transmit control and/or user data.

The principle according to the embodiments advantageously enables to attain very low round trip times while also enabling backward compatible access with conventional terminals/services. For example, when using the principle according to the embodiments to extend existing LTE systems, very low latency Massive Machine Communication (MMC) using LTE can be attained, while also enabling backward compatible access with conventional LTE terminals/services. In other words, the base station according to the embodiments may serve terminals with very low (E2E) latency requirements while at the same time still supporting conventional LTE terminals. Advantageously, according to an embodiment, the ratio of the time/frequency resources which is used for the first and second scheduling granularity may dynamically be controlled, i.e. depending on a load condition within a cell served by the base station.

According to an embodiment, the terminal 20 (Fig. 1) is configured to selectively use different transmission time intervals for data transmissions to a base station 10.

The terminal 20 may e.g. determine which transmission time interval (TTI length) to use depending on static information, which is e.g. standardized and known to both the terminal 20 and the base station 10, and/or depending on resource partitioning information provided by said base station 10 via e.g. system information broadcast and/or RRC signalling.

Also, according to a further embodiment, the terminal 20 may notify the base station 10 of its capabilities and/or requirements, inter alia regarding scheduling granularity and/or TTI, whereupon the base station may assign resources to said terminal taking into account this information of the terminal 20.

According to an embodiment, novel Massive Machine Communication (MMC) applications such as smart grid or traffic safety which require very low E2E latencies in the order of 8ms may be supported.

According to a further embodiment, the mobile wireless network will not be used for MMC traffic alone but shall be able to carry other types of traffic such as voice or broadband, where conventional TTI of 1ms is sufficient and legacy equipment shall be usable, e.g. an electricity utility may want to use such a system for mission critical grid control on one hand, and for ordinary office communication of the mobile workforce or delay-insensitive smart metering on the other hand.

By employing the principle according to the embodiments, existing systems such as e.g. LTE may advantageously be extended to accommodate MMC or other low latency-based systems, while at the same time still being able to serve conventional LTE terminals. I.e., there is no requirement for building up dedicated MMC systems; these may rather also be served by the base station according to the embodiments.

According to a further embodiment, a conventional LTE-type 1ms TTI and a reduced TTI are separated by means of frequency division duplex (FDM), where typically a subset of resource blocks will be allocated said reduced TTI. According to a further embodiment, with a normal cyclic prefix, the LTE TTI carries 14 symbols. So a reasonable shortened TTI could be e.g. 1/7ms, each shortened TTI carrying two symbols, resulting in about 8/7 ms HARQ RTT (assuming 8 HARQ processes). The symbols and prefixes are typically time synchronized across the system bandwidth.

According to a further embodiment, the frequency resources using shortened TTI (for example, group gsc2 of Fig. 3) may carry data and all relevant signals such as DL control signaling or UL/DL ACK/NACK. According to a further embodiment, MMC devices or terminals, generally, using the shortened TTI could transmit signaling such as CQI or RACH also on the normal TTI grid (for example, group gsc1 of Fig. 3). According to a further embodiment, RACH could also be used on both TTI levels, on the conventional TTI for a first UL time synchronization and then on the shortened TTI for fine-tuning, in particular when optimizing for stationary MMC devices (e.g. smart grid).

According to a further embodiment, the FDM resource partitioning, i.e. determining which frequency range to use with which scheduling granularity or TTI, respectively, is typically semi-static via system information broadcast or user-specific by means of RRC signaling. In this way, the MMC devices (or other terminals) are aware of the bandwidth and frequency location allocated for shortened TTI, and the location of DL control signaling can be implicitly defined (predefined as function of allocated bandwidth/position).

According to a further embodiment, the data part with shortened TTI could in principle also be scheduled fully dynamically.

According to a further embodiment, the frequency resources (i.e. subcarriers scx, .., scy) using shortened TTI are typically contiguous (for example, a subset of resource blocks are used) (but might also be non-contiguous e.g. when dynamic data scheduling is applied).

According to a further embodiment, in case some resources configured for shortened TTI are not used for some time, these resources can in principle be allocated with conventional 1ms TTI data traffic.

According to a further embodiment, a first (i.e., conventional) scheduling granularity with TTI of 1ms and a second scheduling granularity with shortened TTI (i.e. 1/7 ms) are used on a same carrier.

According to a further embodiment, in the downlink, some resources may not be allocated with the shortened TTI, e.g. resources spared for synchronization signals, broadcast channel or L1/2 control channels (i.e. blanking can be applied or overlap be avoided).

According to a further embodiment, in the example of Fig. 3, the first three symbols of a 1ms subframe (i.e. symbol group gsy1) are not allocated for shortened TTI as they carry the PDCCH.

According to a further embodiment, in the uplink, frequency resources occupied by PUCCH or RACH are not allocated with the shortened TTI (for example, an overlap can easily be avoided via configuration).

According to a further embodiment, the resource regions denoted by the frequency ranges according to the embodiments are not required to be contiguous along frequency dimension f. In other words, a "frequency range" such as e.g. range gsc2 of Fig. 3 may comprise several frequency subranges (wherein each subrange may e.g. comprise at least one subcarrier) which are not adjacent to each other. Thereby, frequency diversity may be employed.

According to a further embodiment, it is also possible to regularly and/or irregularly assign single subcarriers or groups of subcarriers with different scheduling granularities (along time dimension) and corresponding transmission time intervals.

According to a further embodiment, the frequency ranges gsc1, gsc2 (Fig. 3) may be defined statically or dynamically. It is also possible to employ a frequency hopping scheme which dynamically assigns varying frequency resources to the frequency ranges gsc1, gsc2. The hopping pattern or assignment scheme, respectively, may be standardized or negotiated between components 10, 20 (Fig. 1).

According to a further embodiment, a number of hybrid automatic repeat request (HARQ) processes used within a specific frequency range depends on the scheduling granularity used within said specific frequency range. For example, with the resource partitioning according to Fig. 3, eight HARQ processes may be used for the first frequency range gsc1, and less than eight, e.g. six, HARQ processes may be used for the second frequency range gsc2.

According to a further embodiment, a second scheduling granularity and thus shortened TTI is applied on a second component carrier while control signals such as synchronization signals, broadcast channel, system information, CQI or RACH may be transmitted on a first component carrier.

Although not being limited to LTE-based systems, the principle according to the embodiments can advantageously be used to extend LTE and/or LTE-A and/or 5G wireless communications systems. The principle according to the embodiments enables to attain very low latencies, particularly E2E latencies, while preserving backward compatibility.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method of operating a base station (10) of a cellular communications network (100), wherein time and frequency resources are used for data transmission, wherein a first scheduling granularity is used (200) for scheduling first resources associated with a first frequency range, and wherein a second scheduling granularity, which is different from said first scheduling granularity, is used (210) for scheduling second resources associated with a second frequency range, wherein said first and second scheduling granularities are used within respective time intervals (ti1, ti2) which at least partly overlap each other.

2. Method according to claim 1, wherein said first resources associated with said first frequency range comprise at least a first group (gsc1) of adjacent subcarriers (sc1, .., sc12), and/or wherein said second resources associated with said second frequency range comprise at least a second group (gsc2) of adjacent (scx, .., scy).

3. Method according to one of the preceding claims, wherein said first frequency range is associated with a first component carrier, and/or wherein said second frequency range is associated with a second component carrier, which is different from said first component carrier.

4. Method according to one of the preceding claims, wherein, during a specific time interval (ti1), said first scheduling granularity is used for scheduling resources associated with said first frequency range, and wherein during said specific time interval, said second scheduling granularity is used for scheduling resources associated with said second frequency range.

5. Method according to one of the preceding claims, wherein a first transmission time interval is associated with said first scheduling granularity, and wherein a second transmission time interval, which is different from said first transmission time interval, is associated with said second scheduling granularity.

6. Method according to one of the preceding claims, wherein different scheduling granularities are used along a frequency dimension.

7. Method according to one of the preceding claims, wherein, if specific time frequency resources that are associated with said second scheduling granularity, are unused for a time interval exceeding a predetermined threshold value, said specific time frequency resources are, at least temporarily, used for scheduling data traffic associated with said first scheduling granularity.

8. Method according to one of the preceding claims, wherein said base station (10) determines whether a specific terminal (20) supports said first scheduling granularity and/or said second scheduling granularity, and wherein said base station (10) schedules resources for said specific terminal (20) depending on this determination.

9. Method according to one of the preceding claims, wherein the first scheduling granularity is about 1 millisecond, and wherein the second scheduling granularity is smaller than said first scheduling granularity, wherein the second scheduling granularity preferably ranges from about 50 microseconds to about 200 microseconds.

10. Base station (10) for a cellular communications network (100), wherein time and frequency resources are used for data transmission, wherein the base station (10) is configured to use (200) a first scheduling granularity for scheduling first resources associated with a first frequency range, and to use (210) a second scheduling granularity, which is different from said first scheduling granularity, for scheduling second resources associated with a second frequency range, wherein the base station (10) is configured to use said first and second scheduling granularities within respective time intervals (ti1, ti2) which at least partly overlap each other.

11. Base station (10) according to claim 10, wherein the base station (10) is configured to, during a specific time interval (ti1), use said first scheduling granularity for scheduling resources associated with said first frequency range, and to use, during said specific time interval, said second scheduling granularity for scheduling resources associated with said second frequency range.

## Patentansprüche

1. Verfahren zum Betreiben einer Basisstation (10) eines zellularen Kommunikationsnetzwerks (100), wobei Zeit- und Frequenzressourcen zur Datenübertragung benutzt werden, wobei eine erste Scheduling-Granularität benutzt wird (200) für das Scheduling erster Ressourcen, die zu einem ersten Frequenzbereich zugehörig sind, und wobei eine zweite Scheduling-Granularität, die sich von der besagten ersten Scheduling-Granularität unterscheidet, benutzt wird (210) für das Scheduling zweiter Ressourcen, die zu einem zweiten Frequenzbereich zugehörig sind, wobei die besagten ersten und zweiten Scheduling-Granularitäten innerhalb jeweiliger Zeitintervalle (ti1, ti2) benutzt werden, die sich zumindest teilweise überschneiden.

2. Verfahren nach Anspruch 1, wobei die besagten ersten Ressourcen, die zu dem besagten ersten Frequenzbereich zugehörig sind, mindestens eine erste Gruppe (gsc1) von benachbarten Zwischenträgern (sc1, ..., sc12) umfassen, und/oder wobei die besagten zweiten Ressourcen, die zu dem besagten zweiten Frequenzbereich zugehörig sind, mindestens eine zweite Gruppe (gsc2) von benachbarten Zwischenträgern (scx, ..., scy) umfassen.

3. Verfahren nach einem der vorstehenden Ansprüche, wobei der besagte erste Frequenzbereich zu einem ersten Komponententräger zugehörig ist, und/oder wobei der besagte zweite Frequenzbereich zu einem zweiten Komponententräger zugehörig ist, der sich von dem besagten ersten Komponententräger unterscheidet.

4. Verfahren nach einem der vorstehenden Ansprüche, wobei, während eines spezifischen Zeitintervalls (ti1), die besagte erste Scheduling-Granularität benutzt wird für das Scheduling von Ressourcen, die zu dem besagten ersten Frequenzbereich zugehörig sind, und wobei während des besagten spezifischen Zeitintervalls die besagte zweite Scheduling-Granularität benutzt wird für das Scheduling von Ressourcen, die zu dem besagten zweiten Frequenzbereich zugehörig sind.

5. Verfahren nach einem der vorstehenden Ansprüche, wobei ein erstes Übertragungszeitintervall zu der besagten ersten Scheduling-Granularität zugehörig ist, und wobei ein zweites Übertragungszeitintervall, das sich von dem besagten ersten Übertragungszeitintervall unterscheidet, zu der besagten zweiten Scheduling-Granularität zugehörig ist.

6. Verfahren nach einem der vorstehenden Ansprüche, wobei unterschiedliche Scheduling-Granularitäten entlang einer Frequenzdimension benutzt werden.

7. Verfahren nach einem der vorstehenden Ansprüche, wobei, wenn spezifische Zeit-Frequenzressourcen, die zu der besagten zweiten Scheduling-Granularität zugehörig sind, für ein Zeitintervall, das einen vorbestimmten Grenzwert übersteigt, unbenutzt sind, die besagten spezifischen Zeit-Frequenzressourcen, zumindest vorübergehend, für Datenverkehr-Scheduling benutzt werden, das zu der besagten ersten Scheduling-Granularität zugehörig ist.

8. Verfahren nach einem der vorstehenden Ansprüche, wobei die besagte Basisstation (10) bestimmt, ob ein spezifisches Endgerät (20) die besagte erste Scheduling-Granularität und/oder die besagte zweite Scheduling-Granularität unterstützt, und wobei die besagte Basisstation (10) Ressourcen für das besagte spezifische Endgerät (20) in Abhängigkeit von dieser Bestimmung einplant.

9. Verfahren nach einem der vorstehenden Ansprüche, wobei die erste Scheduling-Granularität etwa 1 Millisekunde beträgt, und wobei die zweite Scheduling-Granularität kleiner ist als die besagte erste Scheduling-Granularität, wobei die zweite Scheduling-Granularität vorzugsweise von etwa 50 Mikrosekunden bis etwa 200 Mikrosekunden reicht.

10. Basisstation (10) für ein zellulares Kommunikationsnetzwerk (100), wobei Zeit- und Frequenzressourcen zur Datenübertragung benutzt werden, wobei die Basisstation (10) ausgelegt ist zum Benutzen (200) einer ersten Scheduling-Granularität für das Scheduling erster Ressourcen, die zu einem ersten Frequenzbereich zugehörig sind, und zum Benutzen (210) einer zweiten Scheduling-Granularität, die sich von der besagten ersten Scheduling-Granularität unterscheidet, für das Scheduling zweiter Ressourcen, die zu einem zweiten Frequenzbereich zugehörig sind, wobei die Basisstation (10) ausgelegt ist zum Benutzen der besagten ersten und zweiten Scheduling-Granularitäten innerhalb jeweiliger Zeitintervalle (ti1, ti2), die sich zumindest teilweise überschneiden.

11. Basisstation (10) nach Anspruch 10, wobei die Basisstation (10) ausgelegt ist, um, während eines spezifischen Zeitintervalls (ti1), die besagte erste Scheduling-Granularität für das Scheduling von Ressourcen zu benutzen, die zu dem besagten ersten Frequenzbereich zugehörig sind, und um, während des besagten spezifischen Zeitintervalls, die besagte zweite Scheduling-Granularität für das Scheduling von Ressourcen zu benutzen, die zu dem besagten zweiten Frequenzbereich zugehörig sind.

## Revendications

1. Procédé de fonctionnement d'une station de base (10) d'un réseau de communications cellulaire (100), dans lequel des ressources de temps et de fréquence sont utilisées pour une transmission de données, dans lequel une première granularité d'ordonnancement est utilisée (200) pour ordonnancer des premières ressources associées à une première plage de fréquences, et dans lequel une deuxième granularité d'ordonnancement, qui est différente de ladite première granularité d'ordonnancement, est utilisée (210) pour ordonnancer des deuxièmes ressources associées à une deuxième plage de fréquences, dans lequel lesdites première et deuxième granularités d'ordonnancement sont utilisées dans des intervalles de temps respectifs (ti1, ti2) qui se chevauchent au moins partiellement.

2. Procédé selon la revendication 1, dans lequel lesdites premières ressources associées à ladite première plage de fréquences comprennent au moins un premier groupe (gsc1) de sous-porteuses adjacentes (sc1, .., sc12), et/ou dans lequel lesdites deuxièmes ressources associées à ladite deuxième plage de fréquences comprennent au moins un deuxième groupe (gsc2) de sous-porteuses adjacentes (scx, .., scy).

3. Procédé selon l'une des revendications précédentes, dans lequel ladite première plage de fréquences est associée à une première porteuse de composante, et/ou dans lequel ladite deuxième plage de fréquences est associée à une deuxième porteuse de composante, qui est différente de ladite première porteuse de composante.

4. Procédé selon l'une des revendications précédentes, dans lequel, durant un intervalle de temps spécifique (ti1), ladite première granularité d'ordonnancement est utilisée pour ordonnancer des ressources associées à ladite première plage de fréquences, et dans lequel durant ledit intervalle de temps spécifique, ladite deuxième granularité d'ordonnancement est utilisée pour ordonnancer des ressources associées à ladite deuxième plage de fréquences.

5. Procédé selon l'une des revendications précédentes, dans lequel un premier intervalle de temps de transmission est associé à ladite première granularité d'ordonnancement, et dans lequel un deuxième intervalle de temps de transmission, qui est différent dudit premier intervalle de temps de transmission, est associé à ladite deuxième granularité d'ordonnancement.

6. Procédé selon l'une des revendications précédentes, dans lequel différentes granularités d'ordonnancement sont utilisées le long d'une dimension de fréquence.

7. Procédé selon l'une des revendications précédentes, dans lequel, si des ressources temps-fréquence spécifiques qui sont associées à ladite deuxième granularité d'ordonnancement, ne sont pas utilisées pendant un intervalle de temps dépassant une valeur de seuil prédéterminée, lesdites ressources temps-fréquence spécifiques sont, au moins temporairement, utilisées pour ordonnancer un trafic de données associé à ladite première granularité d'ordonnancement.

8. Procédé selon l'une des revendications précédentes, dans lequel ladite station de base (10) détermine si un terminal spécifique (20) prend en charge ladite première granularité d'ordonnancement et/ou ladite deuxième granularité d'ordonnancement, et dans lequel ladite station de base (10) ordonnance des ressources pour ledit terminal spécifique (20) en fonction de cette détermination.

9. Procédé selon l'une des revendications précédentes, dans lequel la première granularité d'ordonnancement est environ d'1 milliseconde, et dans lequel la deuxième granularité d'ordonnancement est inférieure à ladite première granularité d'ordonnancement, dans lequel la deuxième granularité d'ordonnancement est de préférence comprise entre environ 50 microsecondes et environ 200 microsecondes.

10. Station de base (10) pour un réseau de communications cellulaire (100), dans laquelle des ressources de temps et de fréquence sont utilisées pour une transmission de données, la station de base (10) étant configurée pour utiliser (200) une première granularité d'ordonnancement pour ordonnancer des premières ressources associées à une première plage de fréquences, et pour utiliser (210) une deuxième granularité d'ordonnancement, qui est différente de ladite première granularité d'ordonnancement, pour ordonnancer des deuxièmes ressources associées à une deuxième plage de fréquences, la station de base (10) étant configurée pour utiliser lesdites première et deuxième granularités d'ordonnancement dans des intervalles de temps respectifs (ti1, ti2) qui se chevauchent au moins partiellement.

11. Station de base (10) selon la revendication 10, la station de base (10) étant configurée, durant un intervalle de temps spécifique (ti1), pour utiliser ladite première granularité d'ordonnancement pour ordonnancer des ressources associées à ladite première plage de fréquences, et pour utiliser, durant ledit intervalle de temps spécifique, ladite deuxième granularité d'ordonnancement pour ordonnancer des ressources associées à ladite deuxième plage de fréquences.
